# EUROPÄISCHE PATENTSCHRIFT

(11) **EP 0 520 225 B1**
(45) Veröffentlichungstag und Bekanntmachung des Hinweises auf die Patenterteilung: **23.08.1995**
(21) Anmeldenummer: 92109567.5
(22) Anmeldetag: 05.06.1992
(51) Int. Cl.: H02P 7/68

(54) **Einzelfelderregung für Mehrmotorenantriebe**
Individual field excitation for multiple-motor drive
Excitation de champ individuel pour actionnement à plusieurs moteurs

(30) Priorität: 06.06.1991 DE 9106965 U
(43) Veröffentlichungstag der Anmeldung: 30.12.1992
(73) Patentinhaber: SIEMENS AKTIENGESELLSCHAFT, 80333 München (DE)
(72) Erfinder: Will, Georg, Dipl.-Ing., W-8520 Erlangen (DE); Sparenborg, Ernst, Dipl.-Ing., W-2870 Delmenhorst (DE); Rudnik, Siegfried, Dipl.-Ing., W-8501 Tuchenbach (DE); Hegmann, Uwe, Dipl.-Ing., W-2860 Osterholz-Scharmbeck (DE)

(56) Entgegenhaltungen:
- EP-A- 140 756
- DE-C- 2 742 973
- GB-A- 2 056 124
- US-A- 4 644 232

## Beschreibung

Die Erfindung betrifft ein Antriebssystem für einen Kran, insbesondere einen Containerkran, mit mehreren Gleichstrommotoren mit Ankerstromkreisen und Felderregerkreisen, wobei die Ankerstromkreise mit einer gemeinsamen Sammelstromschiene verbunden sind.

Bei derartigen Systemen wurde bisher das Feld der Motoren über ein einziges Felderregergerät erregt, wobei der Felderregerstrom über den einzelnen Motoren zugeordnete Einstellwiderstände derart auf die einzelnen Motoren verteilt wurde, daß die Motoren mit gleichen Feldströmen beaufschlagt waren. Bei dieser Anordnung ist nachteilig, daß die Einstellung der Felderregerströme sehr aufwendig und kompliziert ist, da das Felderregergerät einen konstanten Strom liefert und daher die Felderregerströme nicht unabhängig voneinander eingestellt werden können. Darüber hinaus wird für jeden Motor ein Ankerstromüberwachungsgerät mit Schnellabschaltung benötigt, da ansonsten bei einem zu niedrigen Felderregerstrom eines Motors dort ein zu hoher Ankerstrom flösse und dadurch der Motor thermisch zerstört würde.

Aus der EP-A-0 140 756 ist ein Antriebssystem für eine Seilbahn bekannt, bei dem die Ankerstromkreise von zwei Gleichstrommotoren mit ein und derselben Gleichspannung versorgt werden und die Felderregerkreise beider Motoren jeweils ein eigenes Felderregergerät mit einem Einstellelement zum Einstellen des betreffenden Feldstromes aufweisen.

Aufgabe der vorliegenden Erfindung ist es, für einen Kran ein Antriebssystem anzugeben, das sich durch einen besonders einfachen, modularen Aufbau auszeichnet und mit dem es möglich ist, einfach und schnell die Felderregerströme der Motoren einzustellen und einzeln zu überwachen.

Gemäß der Erfindung wird die Aufgabe durch die Merkmale des Patentanspruchs 1 gelöst.

Vorteilhafte Weiterbildungen des erfindungsgemäßen Antriebssystems sind in den Unteransprüchen angegeben.

Zur weiteren Erläuterung der Erfindung wird im folgenden auf die Figuren der Zeichnung Bezug genommen; im einzelnen zeigen:
- FIG 1: ein Blockschaltbild einer Stromversorgungseinrichtung für einen Mehrmotorenantrieb,
- FIG 2: eine Seitenansicht eines Felderregergeräts und
- FIG 3: einen typischen Schaltschrankaufbau

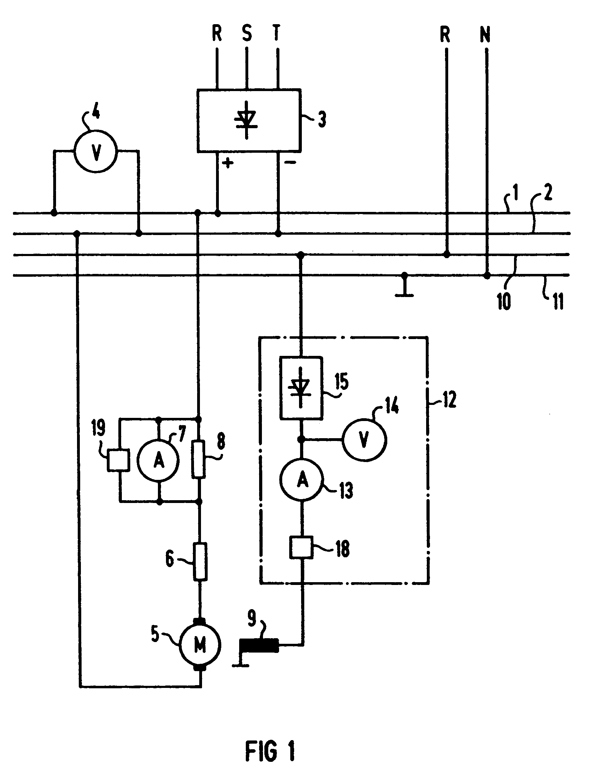

Gemäß FIG 1 werden zwei Sammelstromschienen 1, 2 von einem Stromrichter 3 mit Gleichspannung versorgt. Der Stromrichter 3 wird typisch von den drei Phasen R, S, T eines Drehstromnetzes gespeist und erzeugt eine Ausgangsspannung U_{A} von ca. 500 V. Die Ausgangsspannung U_{A} des Stromrichters 3 wird über das Voltmeter 4 angezeigt.

An die Sammelschienen 1, 2 sind mehrere zusammenwirkende Gleichstrommotoren, z.B. für das Fahrwerk des Krans, angeschlossen. Der Übersichtlichkeit halber wurde jedoch in FIG 1 nur ein Motor 5 dargestellt. Mit dem Motor 5 sind elektrisch in Reihe geschaltet der Vorwiderstand 6 sowie der sogenannte Shunt 8. Parallel zum Shunt 8 sind ein Voltmeter 7 sowie ein Grenzwertschalter 19 geschaltet.

Das Voltmeter 7 mißt die über dem Shunt 8 abfallende Spannung, die proportional zum im Ankerkreis fließenden Strom I_{A} ist. Bei entsprechender Eichung der Anzeige des Voltmeters 7 zeigt das Voltmeter 7 daher den im Ankerkreis fließenden Strom I_{A} an.

Der Grenzwertschalter 19 mißt ebenfalls die über dem Shunt 8 abfallende Spannung. Wenn die abfallende Spannung größer als ein einstellbarer Grenzwert von z.B. 80 mV ist, bedeutet das, daß im Ankerkreis ein extrem hoher Strom fließt, der die Leitungen des Ankerkreises zerstören könnte. In diesem Fall löst der Grenzwertschalter 19 aus und unterbricht die Energiezufuhr zum Mehrmotorenantrieb.

Der Motor 5 ist ein Nebenschlußmotor, dessen Feld von der Erregerwicklung 9 erzeugt wird. Hierzu sind zwei weitere Stromschienen 10, 11 vorgesehen, über die die Erregerwicklung 9 mit Strom versorgt wird. Die Stromstärke I_{E} durch die Erregerwicklung 9 wird dabei durch das Felderregergerät 12 eingestellt, das intern einen Stromrichter 15 aufweist. Die Versorgung der Sammelschienen 10, 11 erfolgt z.B. über die Phase R und den Nulleiter N des Drehstromnetzes. Der durch die Erregerwicklung 9 fließende Strom I_{E} und die an der Erregerwicklung abfallende Spannung U_{E} werden über die Anzeigen 13, 14 anzeigt.

Dadurch, daß jedem Motor 5 ein eigenes Felderregergerät 12 zugeordnet ist, sind die Erregerströme I_{E} und damit indirekt auch die Ankerströme I_{A} der einzelnen Motoren 5 unabhängig voneinander einstellbar. Dadurch ist es leicht und schnell möglich, die Motoren 5 derart einzustellen, daß sie zusammenwirken und daß jeder Motor 5 gleich stark belastet wird.

Auch das Felderregergerät 12 weist einen, vorzugsweise einstellbaren, Grenzwertschalter 18 auf, der ebenfalls auslöst, wenn der Erregerstrom I_{E} unter einen vorwählbaren Grenzwert absinkt. Diesbezüglich sei noch erwähnt, daß im Normalbetrieb, auch bei einem Stillstand des Motors 5, stets ein gewisser Stromfluß durch die Erregerwicklung 9 aufrecht erhalten wird. Ein zu niedriger Erregerstrom I_{E} bedeutet also eine Störung des Betriebs.

Durch die Grenzwertschalter 18, 19 kann der bisher bei Mehrmotorenantrieben verwendete, relativ großvolumige Schnellauslöser entfallen.

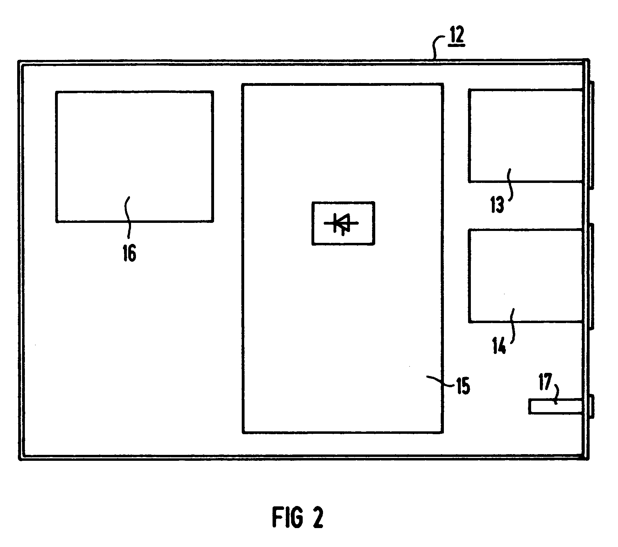

Wie aus FIG 2 ersichtlich ist, besteht jedes Felderregergerät 12 aus einem Gleichrichter 15, vorzugsweise einem gesteuerten Brückengleichrichter, der die eingespeiste Wechselspannung gleichrichtet. Die Kommutierungsdrossel 16 begrenzt den Stromfluß während des Kommutierens des Stromrichters 15. Der Erregerstrom I_{E} wird im Amperemeter 13 und die Erregerspannung U_{E} im Voltmeter 14 gemessen und angezeigt. Das Potentiometer 17 dient zur Einstellung der Größe des Erregerstroms I_{E}.

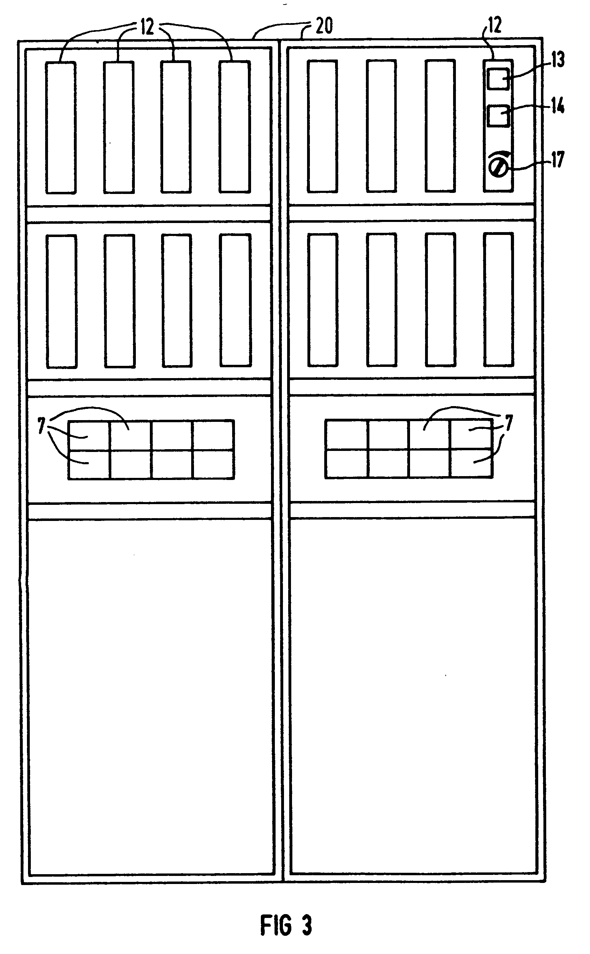

FIG 3 zeigt den typischen konstruktiven Aufbau des Schaltschranksystems für einen Mehrmotorenantrieb. Im vorgegebenen Fall wirken 16 Motoren zusammen. Die zugehörigen Felderregergerate 12 sind, unter Ausnutzung des zur Verfügung stehenden Schrankvolumens, in zwei Ebenen in die Rahmenplätze von zwei nebeneinander angeordneten Schaltschränken 20 eingesteckt. Unterhalb der Einsteckmodule für die Felderregergeräte 12 sind die Amperemeter 7 für die zugehörigen Ankerströme I_{A} angeordnet. Über die Felderregergeräte 12 werden die Erregerströme I_{E} und damit indirekt auch die Ankerströme I_{A} beeinflußt. Wie aus FIG 3 ersichtlich ist, sind die Einschubteile derart gestaltet, daß die Spannungs- und Stromanzeigen 13, 14 von vorne ablesbar sind. Das Potentiometer 17, über das der Erregerstrom eingestellt wird, ist von vorne einstellbar, z.B. mittels eines Schraubendrehers.

## Patentansprüche

1. Antriebssystem eines Krans, insbesondere Containerkrans, mit mehreren Gleichstrommotoren (5) mit Ankerstromkreisen und Felderregerkreisen, wobei die Ankerstromkreise mit einer gemeinsamen Sammelschiene (1, 2) verbunden sind und die Felderregerkreise jeweils ein eigenes Felderregergerät (12) mit einer Stromanzeige (13), einer Spannungsanzeige (14) sowie einem Einstellelement (17) zum Einstellen des betreffenden Feldstroms (I_{E}) aufweisen, und wobei die Felderregergeräte (12) als Einschubteile ausgebildet und zusammen mit Stromanzeigen (7) für die Ankerströme (I_{A}) in wenigstens einem Schaltschrank (20) angeordnet sind.

2. Antriebssystem nach Anspruch 1,
**dadurch gekennzeichnet,**
daß die Felderregergeräte (12) Sicherungselemente (Grenzwertschalter 18) zur Feldkreisüberwachung aufweisen.

3. Antriebssystem nach Anspruch 1 oder 2,
**dadurch gekennzeichnet,**
daß die Ankerkreise Sicherungselemente (Grenzwertschalter 19) zur Ankerkreisüberwachung aufweisen.

## Claims

1. Drive system of a crane, in particular a container crane, having several d.c. motors (5) with armature circuits and field circuits, whereby the armature circuits are connected to a common busbar (1, 2) and the field circuits have in each case their own field excitation control unit (12) with a current display (13), a voltage display (14) and an adjusting element (17) to adjust the relevant field current (I_{E}), and whereby the field excitation control units (12) are constructed as insertion parts and are arranged together with current displays (7) for the armature currents (I_{A}) in at least one control cabinet (20).

2. Drive system according to claim 1,
characterized in that the field excitation control units (12) have fuse-elements (limit monitors 18) to monitor the field circuit.

3. Drive system according to claim 1 or 2,
characterized in that the armature circuits have fuse-elements (limit monitors 19) to monitor the armature circuit.

## Revendications

1. Système d'actionnement d'une grue, notamment d'une grue pour conteneurs, comprenant plusieurs moteurs à courant continu (5) ayant des circuits d'enroulement de l'induit et des circuits d'excitation du champ, dans lequel les circuits d'enroulement de l'induit sont connectés à une barre collectrice commune (1, 2) et les circuits d'excitation du champ présentent chacune une unité d'excitation du champ (12) propre avec un affichage de courant (13), un affichage de tension (14) ainsi qu'un élément de réglage (17) pour régler le courant inducteur (I_{E}), et dans lequel les unités d'excitation du champ (12) sont conçues pour montage en rack et sont agencées, ensemble avec des affichages de courant (7) pour le courant d'induit (I_{A}), dans au moins une armoire de commutation (20).

2. Système d'actionnement selon la revendication 1,
caractérisé en ce que
les unités d'excitation du champ (12) présentent des dispositifs protecteurs (interrupteurs à valeur limite 18) pour la surveillance des circuits inducteurs.

3. Système d'actionnement selon la revendication 1 ou 2,
caractérisé en ce que
les circuits d'induit présentent des dispositifs protecteurs (interrupteurs à valeur limite 19) pour la surveillance des circuits d'induit.
